# EUROPEAN PATENT SPECIFICATION

(11) **EP 0 935 125 B1**
(45) Date of publication and mention of the grant of the patent: **02.05.2007**
(21) Application number: 99200268.3
(22) Date of filing: 02.02.1999
(51) Int. Cl.: G01F 15/02, G01F 3/08

(54) **Measuring device for measuring the flow of a gas or liquid**
Vorrichtung zum Messen einer Gasströmung oder einer Flüssigkeitsströmung
Dispositif de mesure pour la mesure d'un débit d'un gaz ou d'un liquide

(30) Priority: 06.02.1998 NL 1008221
(43) Date of publication of application: 11.08.1999
(73) Proprietor: Elster-Instromet B.V., 7064 KA Silvolde (NL)
(72) Inventor: Dijstelbergen, Harmen Hein, 2910 Essen (BE)
(74) Representative: Ferguson, Alexander

(56) References cited:
- DE-A- 2 224 857
- US-A- 4 007 635
- HERNING F: "GEDANKEN ZUR MOEGLICHEN WEITERENTWICKLUNG DER HOCHDRUCKGASMESSUNG AUS DER SICHT DER FERNGASVERSORGUNG" GWF GAS.ERDGAS, vol. 108, no. 7, 17 February 1967, pages 157-162, XP002036716

## Description

The invention relates to a measuring device comprising a measuring module which causes pulsations in the flow to be measured, for instance a rotary piston gauge, which measuring module comprises an inlet opening and a discharge opening.

Known are for instance rotary piston gauges which consist of an in cross-section oval-shaped housing in which substantially 8-shaped rotary pistons or rotors are placed. The 8-shaped rotors close off the pipe portion during the entire rotating movement because the rotors almost touch each other and the wall of the pipe portion with a very little clearance. During the rotary movement a part of the gas is separated each time on the supply side in one of the hollow parts of the circumference of the 8-shape of one of the pistons. When the piston rotates on, said separated quantity of gas is released again on the discharge side.

A drawback of the known rotary piston gauges is that pressure pulsations occur. At high pressures large loads may occur on the bearings of the rotary pistons, the result of which is detrimental to the life-span and the reliability of the rotary piston gauge. For some flow rates the pulsation frequency may coincide with the natural frequency of the connected pipes as a result of which resonance occurs. These resonance phenomena are detrimental to the accuracy of the measurements. The pulsations also cause noise, which is disadvantageous particularly in residential areas.

Documents US 4 007 635 and DE 2 224 857 disclose flow measuring devices solving the problem of pressure pulsations.

The object of the invention is to provide a measuring device of the kind described in the preamble, in which the pressure pulsations are suppressed as much as possible.

This object of the invention is achieved with a measuring device in which the measuring module is placed in a pressure chamber, which pressure chamber comprises a supply opening and a discharge opening, in which a slack flexible wall, for instance a membrane, divides the space in the pressure chamber in a first sub-space in which the inlet opening of the measuring module ends, and a second sub-space in which the discharge opening of the measuring module ends.

With this measure it is achieved that the volume of the space in which the gas or the liquid ends up after passing the measuring module, may increase or decrease, so that the pressure in the gas or the liquid does not increase or hardly increases. The pressure pulsations are removed at a very short distance from the place where they arise, namely almost directly behind the measuring module. The acoustic impedance of the membrane and the areas on either side of the membrane is very low in relation to the acoustic impedance of supply and discharge pipes as a result of which the pulsations do not or to a less degree penetrate these connection pipes.

In a preferred embodiment of the device according to the invention the membrane forms a loop-shaped wall which envelopes the measuring module and which determines the limits of a closed-off area while leaving open a first passage opening and a second passage opening, in which the first passage opening is in connection with the discharge opening of the measuring module and in which the second passage opening is in connection with the supply opening of the pressure chamber. This has the advantage that the discharge opening of the measuring module ends in an area which for a very large part is limited by a flexible wall so that in relation to the volume of said area, the possible volume increase is as large as possible. This leads to a compact measuring device in which the pressure pulsations are suppressed as much as possible by the flexible wall. In order to let the gas or liquid flow from the supply opening of the pressure chamber to the discharge chamber a static pressure drop is present, as a result of which there is a certain pressure from the inside on the cylindrical wall, so that the cylindrical wall bulges a little. When the measuring module emits a pressure pulse, the volume of the area around the flexible wall increases so that the flexible wall is pressed back to the inside a little in radial direction and bulges to a less extent.

Another possible preferred embodiment shows essentially the same construction in which however the first passage opening is in connection with the inlet opening of the measuring module and in which the second passage opening is in connection with the discharge opening of the pressure chamber. This embodiment essentially has the same construction as the aforementioned preferred embodiment, however the gas or the liquid flows through it in reversed direction.

Preferably the membrane forms a substantially cylindrical wall, in which the extremities of the area enveloped by the flexible wall are covered by means of lids or such like closing means. This embodiment is easy to realise.

The passage opening in such an embodiment is preferably arranged in one of either lids so that the flexible wall has as much freedom as possible to expand. In another possible embodiment the passage opening is arranged however in the flexible wall in the extension of the discharge opening of the measuring module, so that the gas or the liquid can go a shorter way.

In another preferred embodiment the membrane is arranged between the measuring module and the part of the inner wall of the pressure chamber facing the measuring module. Such an embodiment is simple in construction and can be realised at low costs.

Both the supply opening and the discharge opening of the pressure chamber preferably are provided with restrictions or narrowings. Pulsations that possibly still occur thus remain confined to the area between the restrictions and cannot propagate in the connection pipes. These restriction can however be kept limited because the pressure pulsations are almost completely absorbed by the slack wall.

The invention will be elucidated on the basis of the drawing, in which:
Figure 1A and 1B show a schematic cross-section of a measuring device according to the invention in two consecutive steps;
Figure 2 shows a schematic longitudinal section of another possible measuring device according to the invention;
Figure 3 shows a measuring device in cross-section along the line III-III from figure 2;
Figure 4 shows a top view of a lid for a measuring module of the measuring device according to figure 2;
Figure 5 shows a cross-section of a third possible measuring device according to the invention;
Figure 6 shows a cross-section of a fourth possible measuring device according to the invention;
Figure 7 shows a cross-section of a fifth possible measuring device according to the invention.

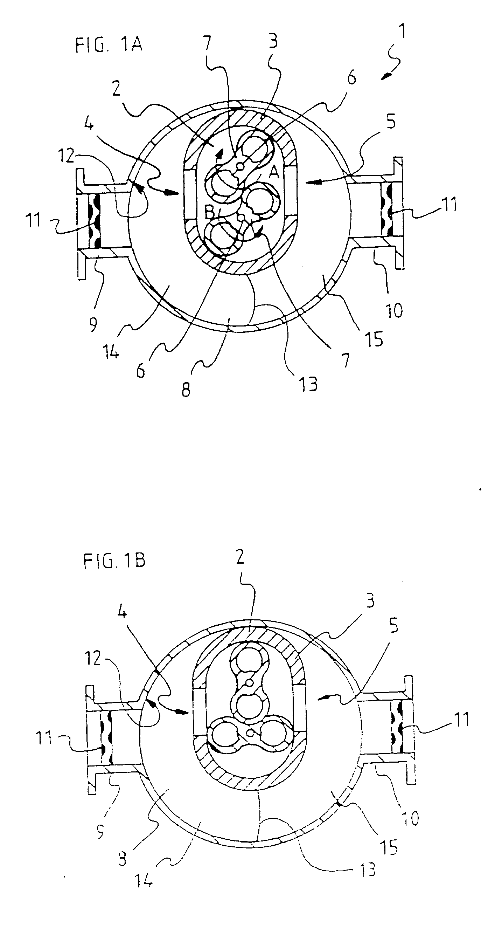

The figures 1A and 1B schematically show a cross-section of a measuring device 1 according to the invention, provided with a measuring module which in this exemplary embodiment consists of a rotary piston gauge 2. The rotary piston gauge 2 consists of a housing 3 with an inlet opening 4 and a discharge opening 5. In the housing 3 two substantially 8-shaped rotary pistons or rotors 7 are placed, which are rotatable about a rotary shaft 6. Both rotary pistons 7 are rotated in opposite directions in the direction of rotation A and B respectively. Here both rotary pistons 7 always remain in contact with the inner wall of the housing 3 on the one hand and each other on the other hand, so that the rotary pistons 7 cooperate with each other and with the housing 3 in each position and close off the inlet opening 4 of the discharge opening 5. During the rotation the rotary pistons 7 in cooperation with the inner wall of housing 3 each time separate a quantity of gas or liquid on the side of the inlet opening 4, after which said separated quantity is led through to the side of the discharge opening 5. The number of rotations per time unit is determinative for the quantity of gas or liquid which passes the gauge 2.

The rotary piston gauge 2 is placed in a pressure chamber 8. The pressure chamber 8 is connected to a supply pipe 9 and a discharge pipe 10. Both in the supply pipe 9 and in the discharge pipe 10 a restriction 11 is accommodated. The housing 3 of the rotary piston gauge 2 on one side touches the inner wall 12 of the pressure chamber 8. Between the opposite side at the inner wall 12 of the pressure chamber 8 and the housing 3 of the rotary piston gauge 2 a slack membrane 13 has been arranged. The membrane 13 in cooperation with the rotary piston gauge 2 divides the pressure chamber 8 into two sub-spaces, namely a first sub-space 14 on the side of the supply pipe 9 and a second sub-space 15 on the side of the discharge pipe 10. The inlet opening 4 of the rotary piston gauge 2 ends in the first sub-space 14 whereas the discharge opening 5 of the rotary piston gauge 2 is in open connection with the second sub-space 15. Near the supply pipe 9 the pressure in the pressure chamber 8 is higher than near the discharge pipe 10, so that the gas or the liquid flows through from the supply side in the direction of the discharge side. As a result the membrane 13 will bulge in the direction of the discharge side.

In figure 1B the device 1 is shown in which the rotary pistons 7 are rotated so far that a new quantity of gas or liquid has just been discharged to the discharge side. Because of the restriction 11 in the discharge pipe 10 the gas or liquid will as a result of the recently discharged quantity not be able to directly flow away completely into the discharge pipe 10. Because of the extra quantity of gas or liquid in the second sub-space 1 5 the membrane 13 retreats a little in the direction of the supply side, so that the membrane bulges to a lesser extent in the direction of the discharge side. Because thus the volume of the sub-space 15 increases, the pressure does not increase or hardly increases.

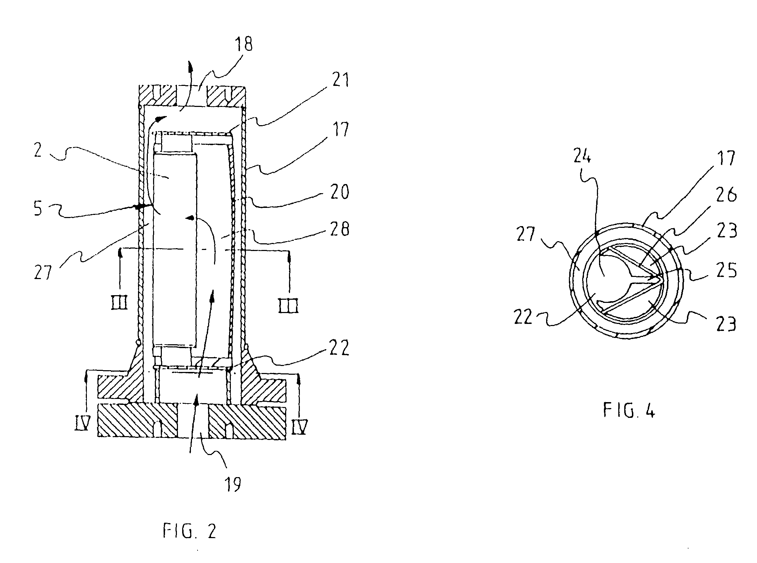

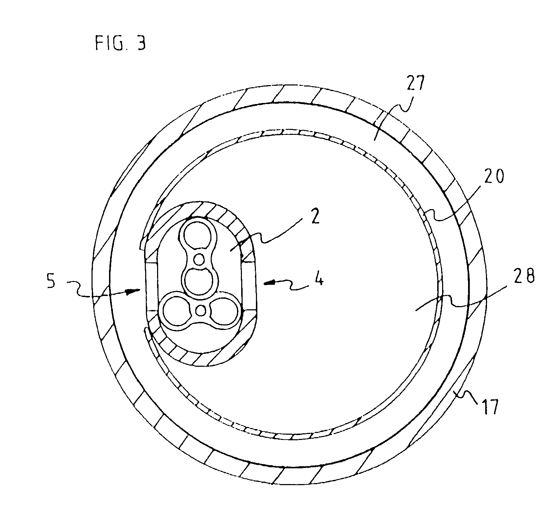

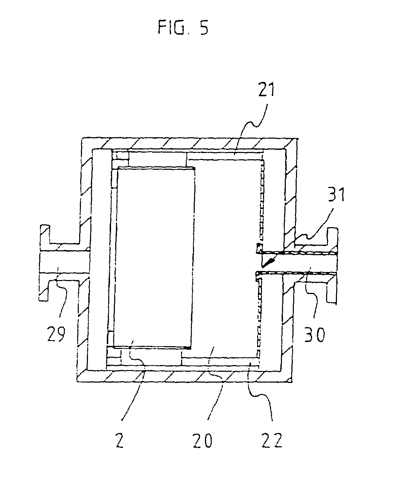

Another exemplary embodiment of a measuring device according to the invention is shown in figure 2 in which a longitudinal section of an alternative preferred embodiment of a measuring device according to the invention is shown. This embodiment is shown in figure 3 in cross-section along line III-III of figure 2, whereas in figure 4 a cross-section along the line IV-IV is shown. The device consists of a substantially cylindrical pressure chamber 1 7 with a discharge opening 18 and a supply opening 19. In the pressure chamber 17 a measuring module 2, for instance a rotary piston gauge, has been accommodated. A flexible membrane forms a substantially cylindrical, slack wall 20 which envelopes the measuring module 2 while leaving open the discharge opening 5 of the rotary piston gauge 2. Said cylindrical wall 20 is closed off at the top and bottom side by means of a lid 21, 22. The lid 22 at the bottom side, which is shown in top view in figure 4, is situated above the supply opening 19 and comprises a substantially sickle-shaped opening 23, which is situated around a plate-shaped portion or platform 24. This plate-shaped portion 24 serves to support the measuring module 2. The sickle-shaped opening 23 is divided in two by a material bridge or rib 25. For reinforcement a cage-shaped supporting structure 26 has been placed around the flexible wall 20 and the lids 21, 22. The flexible wall 20 and the lids 21, 22 divide the inner space of the pressure chamber 17 into an annular first sub-space 27 between the inner wall of the pressure chamber 17 and the flexible wall 20, and a second sub-space 28 which is enveloped by the flexible wall 20 and the lids 21, 22. The discharge opening 5 of the measuring module 2 ends in the annular first sub-space 27 whereas the inlet opening 5 of the measuring module 2 ends in the second sub-space 28 (see figure 3).

The gas of the liquid flows through the device according to the arrows shown in figure 2, so via the supply pipe 19 in the second sub-space 28, after which it passes the measuring module 2 via the inlet opening 4, and subsequently ends up in the first sub-space 27. As a result of the static pressure drop which ensures the through-flow of the gas or the liquid, the cylindrical wall is bulged. When a pressure pulse is emitted at the discharge opening 5 of the measuring module 2, the flexible wall 20 is pressed back a little to the inside in radial direction so that the wall is less bulged and the volume of the second sub-space 28 is reduced whereas the volume of the annular first sub-space 27 is enlarged. Subsequently the gas or the liquid is discharged evenly via the connection pipe 18.

The gas or the liquid however can also run through the device of figure 2 in reversed order. In that case the opening 4 of the measuring module 2 functions as discharge opening whereas the opening 5 of the measuring module 2 in that case functions as inlet opening. The pipe 18 of the pressure chamber 17 in that case serves as supply pipe whereas the pipe 19 then serves as discharge pipe. Via the pipe 18 the gas flows in the annular first sub-space 27, subsequently through the measuring module 2 to the second sub-space 28 which is enveloped by the flexible wall 20 and the lids 21, 22, subsequently via the sickle-shaped opening 23 to the discharge pipe 19. When a pressure pulse is emitted at the measuring module 2, the flexible wall 20 expands in radial direction as a result of which the wall becomes less hollow, after which the gas or the liquid is evenly discharged via the opening 23 in the lower lid 22.

In a variation of this preferred embodiment the opening can be arranged in the membrane 20 in stead of in the lid, as is shown in figure 5. Here a supply connection 29 and a discharge connection 30 are connected to the pressure chamber 17 in a direction which is at right angles to the longitudinal direction of the measuring module 2. The discharge connection 30 is connected to the second sub-space 28 via an opening 31 in the flexible wall 20.

Furthermore it is possible to place the measuring module approximately in the centre of the space which is limited by the cylindrical wall, in which a feed-through pipe connects either the inlet opening or the discharge opening of the measuring module with the area around the flexible wall.

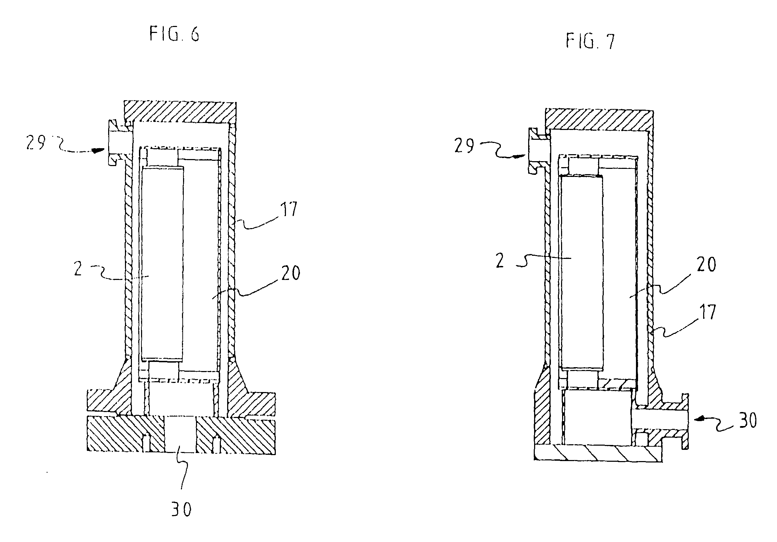

Figures 6 and 7 show exemplary embodiments in which the connections 29, 30 of the pressure chamber 17 are arranged at different locations.

## Claims

1. Measuring device comprising a measuring module (1) which causes pulsations in the flow to be measured, for instance a rotary piston gauge (2), which measuring module comprises an inlet opening (4) and a discharge opening (5), **characterized in that** the measuring module is placed in a pressure chamber (8), which pressure chamber comprises a supply opening (9,19,29) and a discharge opening (11,18,30), in which a slack flexible wall (13,20) for instance a membrane, divides the space in the pressure chamber (8) in a first sub-space in which the inlet opening (4) of the measuring module ends, and a second sub-space in which the discharge opening (5) of the measuring module ends.

2. Device according to claim 1, **characterized in that** the membrane (13,20) forms a loop-shaped wall, for instance a substantially cylindrical wall, which envelopes the measuring module (1) and which determines the limits of a closed-off area while leaving open a first passage opening and a second passage opening, in which the first passage opening is in connection with the discharge opening of the measuring module and in the second passage opening is in connection with the supply opening of the pressure chamber.

3. Device according to claim 1, **characterized in that** the membrane (13,20) forms a loop-shaped wall, for instance a substantially cylindrical wall, which envelopes the measuring module and which determines the limits of a closed-off area while leaving open a first passage opening and a second passage opening, in which the first passage opening is in connection with the inlet opening of the measuring module and in which the second passage opening is in connection with the discharge opening of the pressure chamber.

4. Device according to claim 2 or 3, **characterized in that** the membrane (13,20) forms a substantially cylindrical wall in which the extremities of the area enveloped by the flexible wall are covered by means of lids.

5. Device according to claim 4, **characterized in that** the second passage opening is arranged in one of either lids.

6. Device according to claim 2, 3 or 4, **characterized in that** the passage opening is arranged in the flexible wall in the extension of the discharge opening.

7. Device according to claim 1, **characterized in that** the membrane (13,20) is arranged between the measuring module and the part of the inner wall of the pressure chamber facing the measuring module.

8. Device according to any one of the preceding claims, **characterized in that** both the supply opening and the discharge opening of the pressure chamber are provided with restrictions or narrowings.

## Patentansprüche

1. Meßvorrichtung umfassend einen Meßmodul (1), welcher Pulsationen in dem zu messenden Strom verursacht, zum Beispiel einen Drehkolbenmesser (2) welcher Meßmodul eine Einlaßöffnung (4) und eine Auslauföffnung (5) umfaßt, **dadurch gekennzeichnet, daß** der Meßmodul in einem Druckraum (8) angeordnet ist, welcher Druckraum eine Zufuhröffnung (9,19,29) umfaßt und eine Auslauföffnung (11,18,30), worin eine schlaffe flexible Wand (13,20), zum Beispiel eine Membran, den Raum im Druckraum (8) in einen ersten Teilraum, worin die Einlaßöffnung (4) des Meßmoduls mündet, und einen zweiten Teilraum, worin die Auslauföffnung (5) des Meßmoduls mündet, verteilt.

2. Vorrichtung nach Anspruch 1, **dadurch gekennzeichnet, daß** die Membran (13,20) eine schleifenförmige, zum Beispiel hauptsächlich zylindrische, Wand bildet, die den Meßmodul (1) umhüllt und die einen abgeschlossenen Raum unter Freilassung einer ersten Durchlaßöffnung und einer zweiten Durchlaßöffnung begrenzt, wobei die erste Durchlaßöffnung mit der Auslauföffnung des Meßmoduls in Verbindung steht und wobei die zweite Durchlaßöffnung mit der Zufuhröffnung des Druckraums in Verbindung steht.

3. Vorrichtung nach Anspruch 1, **dadurch gekennzeichnet, daß** die Membran (13,20) eine schleifenförmige, zum Beispiel hauptsächlich zylindrische, Wand bildet, die den Meßmodul umhüllt und die einen abgeschlossenen Raum unter Freilassung einer ersten Durchlaßöffnung und einer zweiten Durchlaßöffnung begrenzt, wobei die erste Durchlaßöffnung mit der Einlaßöffnung des Meßmoduls in Verbindung steht und wobei die zweite Durchlaßöffnung mit der Auslauföffnung des Druckraums in Verbindung steht.

4. Vorrichtung nach Anspruch 2 oder 3, **dadurch gekennzeichnet, daß** die Membran (13,20) eine hauptsächlich zylindrische Wand bildet, wobei die Enden des durch die flexible Wand umschlossenen Raums durch Deckel abgedeckt werden.

5. Vorrichtung nach Anspruch 4, **dadurch gekennzeichnet, daß** die zweite Durchlaßöffnung in einem der beiden Dekkel angeordnet ist.

6. Vorrichtung nach Anspruch 2, 3 oder 4, **dadurch gekennzeichnet, daß** die Durchlaßöffnung in der flexiblen Wand in der Verlängerung der Auslauföffnung angeordnet ist.

7. Vorrichtung nach Anspruch 1, **dadurch gekennzeichnet, daß** die Membran (13,20) zwischen dem Meßmodul und dem gegenüber dem Meßmodul befindlichen Teil der Innenwand des Druckraums angeordnet ist.

8. Vorrichtung nach einem der vorhergehenden Ansprüche, **dadurch gekennzeichnet, daß** sowohl die Zufuhröffnung als die Auslauföffnung des Druckraums mit Restriktionen oder Verengungen versehen sind.

## Revendications

1. Dispositif de mesure comprenant un module de mesure (1) qui provoque des pulsations dans l'écoulement à mesurer, par exemple une jauge à piston rotatif (2), lequel module de mesure comprend une ouverture d'entrée (4) et une ouverture d'évacuation (5), **caractérisé en ce que** le module de mesure est placé dans une chambre de pression (8), laquelle chambre de pression comprend une ouverture d'alimentation (9, 19, 29) et une ouverture d'évacuation (11, 18, 30), dans lequel une paroi flexible lâche (13, 20), par exemple une membrane, divise l'espace de la chambre de pression (8) en un premier sous-espace, dans lequel l'ouverture d'entrée (4) du module de mesure se termine, et un second sous-espace, dans lequel l'ouverture d'évacuation (5) du module de mesure se termine.

2. Dispositif selon la revendication 1, **caractérisé en ce que** la membrane (13, 20) forme une paroi configurée en boucle, par exemple une paroi sensiblement cylindrique, qui enveloppe le module de mesure (1) et détermine les limites d'une zone fermée tout en laissant une première ouverture de passage et une seconde ouverture de passage ouvertes, dans lequel la première ouverture de passage est reliée à l'ouverture d'évacuation du module de mesure et la seconde ouverture de passage est reliée à l'ouverture d'alimentation de la chambre de pression.

3. Dispositif selon la revendication 1, **caractérisé en ce que** la membrane (13, 20) forme une paroi configurée en boucle, par exemple une paroi sensiblement cylindrique, qui enveloppe le module de mesure et détermine les limites d'une zone fermée tout en laissant une première ouverture de passage et une seconde ouverture de passage ouvertes, dans lequel la première ouverture de passage est reliée à l'ouverture d'entrée du module de mesure et la seconde ouverture de passage est reliée à l'ouverture d'évacuation de la chambre de pression.

4. Dispositif selon la revendication 2 ou 3, **caractérisé en ce que** la membrane (13, 20) forme une paroi sensiblement cylindrique, dans laquelle des couvercles recouvrent les extrémités de la zone enveloppée par la paroi flexible.

5. Dispositif selon la revendication 4, **caractérisé en ce que** la seconde ouverture de passage est ménagée dans l'un quelconque des couvercles.

6. Dispositif selon la revendication 2, 3 ou 4, **caractérisé en ce que** l'ouverture de passage est ménagée dans la paroi flexible, dans l'extension de l'ouverture d'évacuation.

7. Dispositif selon la revendication 1, **caractérisé en ce que** la membrane (13, 20) est agencée entre le module de mesure et la partie de la paroi interne de la chambre de pression faisant face au module de mesure.

8. Dispositif selon l'une quelconque des revendications précédentes, **caractérisé en ce qu'**à la fois l'ouverture d'alimentation et l'ouverture d'évacuation de la chambre de pression sont pourvues de resserrements ou de rétrécissements.
